# EUROPEAN PATENT APPLICATION

(11) **EP 1 400 459 A1**
(43) Date of publication of application: **24.03.2004**
(21) Application number: 03255919.7
(22) Date of filing: 22.09.2003
(51) Int. Cl.: B65D 63/08, F16L 3/233, A44B 11/02

(54) **Cable ties**

(30) Priority: 20.09.2002 GB 0221886
(71) Applicant: Band-It Company Limited, Chesterfield Derbyshire S43 3PF (GB)
(72) Inventor: Greaves,David, Sheffield, S31 8XP (GB); Parr, John, Sheffield, S21 1DW (GB); Andrew, Ford, Sheffiled, S21 4FD (GB); Dodd, Stephen, Sheffield, S11 9NE (GB)
(74) Representative: Stoner, Gerard Patrick

(57) **Abstract**

A metal ball-locking cable tie (1) is fully coated with epoxy resin which gives good locking performance and reliability. The tie is powder coated with the locking head (2) already assembled, preferably using a suspension hanger which blocks the downward opening of the locking head.

## Description

This invention has to do with cable ties, i.e. straps which have a fastening buckle so that they can be locked in a loop, over a range of loop sizes, to hold objects - typically cable bundles - together and/or onto some support structure.

### BACKGROUND

The present proposals relate particularly to metal cable ties, which are preferred to the cheaper all-plastic one-piece ties where the performance requirements are more strict e.g. in offshore and ship applications. While some metal ties imitate plastic ties in having a metal strap with a longitudinal series of holes, any of which can be locked over a corresponding lug in the buckle to secure the tie, it is popular to use plain metal straps secured by appropriate buckles without using locking holes. Some of these involve bending the free end of the strap around the buckle after it has been pulled through, to hold the loop shut.

A popular type to which the present proposals are particularly relevant uses a lock head attached adjacent one end of the strap. The lock head defines a strap channel through which the second free end of the strap can be passed, entering through an insertion opening of the lock head and leaving through an exit opening. A locking element is housed in the head next to the strap path and is moveable relative to the head between an unlocked position in which it lies toward the exit opening, and in which it can distance itself sufficiently from the strap path for the strap end to be inserted along the channel, and a locked position lying closer to the insertion opening in which its engagement with the surrounding head structure, acting in concert with tension in the strap seeking to pull it back out through the insertion opening, forces it into locking engagement with the strap surface, preventing it from pulling out by means of friction and/or deformation of the strap material. Preferably the locking element is a free element, particularly a discrete roller e.g. a ball, constrained in a roller-holding portion of the lock head having a guide surface which converges with the strap path towards the insertion opening to create the desired effect. Cable ties using a ball locking element - commonly known as ball-lock ties - are particularly popular because although their locks are not always as strong and reliable as some others, they are notably convenient to use; it is simple to pass the free end through the head and tighten and lock the tie, by hand or with a locking tool (which typically also severs any excess length of the free end).

Ties corresponding with the above general description (lock head, locking element etc.) are referred in what follows as cable ties 'of the kind described'.

There is frequently a preference for metal cable ties to be covered with an insulative plastic coating. This helps to prevent galvanic interactions between the tie and adjacent metal components, and makes the tie easier to handle in cold conditions. Nylon 11 is the leading coating material, being halogen-free (a prevailing requirement) and applicable by powder coating methods which are preferable for articles of this kind. Unfortunately the coated straps do not work in ties of the kind described, because the coated surface slips when engaged with the locking element; the tie does not lock at all or is not reliable. US5103534 proposes getting around this difficulty by leaving an uncoated strip down the middle of the outer face of the strap, while covering other parts and particularly the edges. This can lock satisfactorily - although not so strongly as an uncoated tie - but is troublesome to make and less acceptable to some users than a fully coated tie.

### NEW PROPOSALS

We now put forward various changes and improvements related to metal cable ties of the kind described. Various aspects of our proposals relate respectively to achieving better locking performance with a fully-coated tie strap, to a new way of making fully-coated ties, and to a further means for improving locking strength which may be applied in both coated and uncoated ties.

Firstly, as a result of detailed investigations we have determined that a fully-coated metal cable tie of the kind described can be made to lock satisfactorily. When we say 'fully-coated' we are talking about a tie in which the metal strap is plastic-covered over at least the locking region - particularly a central longitudinal band along the outer surface - and typically covered all over, preferably including the side edges and optionally but not necessarily the end edges.

In a first aspect of the invention, our unexpected finding is that by making this coating of an epoxy resin coating composition, one can readily obtain a combination of resin properties and resin adhesion to the metal substrate that can give excellent and consistent locking in a tie of the kind described e.g. in a ball-lock tie. Relatively thin coatings work well; conventionally-applied thicknesses e.g. from 3 to 5 thousandths of an inch (from 75 to 130 µm) are effective. As is known, the thickness of the coating tends to differ at different regions of the strap.

The resin coating is preferably powder coated, e.g. by means of electrostatic spraying to apply the powder followed by suitable heating for flowout and cure, the resin being typically thermosetting. Epoxy resins have the advantage of being readily obtainable in a range of powder coating formulations applicable to steel (stainless steel being the preferred strap material) while being free of halogen and having good chemical resistance. Surface pre-treatment (physical or chemical) may be used but is usually unnecessary.

A key factor for good locking is a high level of adhesion of the polymer to the underlying metal, preferably combined with a recommended thickness. Thus, while epoxy is a preferred material, the present proposals in a more general aspect extend to the use of any polymer coating that, when used on a ball lock tie made with 7.9mm steel band, achieves a loop tensile strength greater than 800N, 900N or more preferably 1000N in at least 95% of samples e.g. in a split mandrel test (a conventional test). These are preferred minimum performances for the epoxy too.

A second aspect of our proposals relates to a new method for making a coated metal cable tie. This method is characterized in that the buckle (lock head) portion of a metal cable tie is assembled onto the metal strap, which is cut to length, i.e. an uncoated metal cable tie is made. Preferably any discrete locking element (roller e.g. ball) is also assembled at this stage. Subsequently the entire assembled tie is subjected to the application of a plastic coating, preferably by powder coating and particularly preferably using an electrostatic spray method to apply the powder. The pre-assembled ties may be passed through a powder coating chamber suspended from an appropriate rack; this is in itself well known to people skilled in powder coating. Subsequently the coated ties - on which at least the outsides of the buckles will be coated as well as the straps - are heat treated in a manner appropriate to the chosen polymer - preferably an epoxy resin as per the first aspect - to flowout and cure the coating. For example, with epoxy material this may involve baking in an oven at a temperature between 150 and 250°C, for from 5-20 minutes. A skilled person can readily select the conditions appropriate to a given coating composition..

In a preferred and novel procedure the tie is held (typically hung) head up for coating so that gravity inhibits entry of powder into the (usually wider) exit end of the head. Additionally or alternatively measures may be taken to reduce or avoid coating material entering the buckle and/or adhering to the roller, e.g. a hanger element that engages the roller so as to move it up towards the narrow end of the head interior, and/or substantially or partially blocks an opening into the buckle. Hanging the tie head upwards using a hanger element (hook) that enters the locking head's exit opening and holds the locking element up away from that opening is preferred.

The remarkable finding here is that, contrary to expectation, the performance of the locking head is not spoiled by being subjected to the powder coating process. A small quantity of powder may deposit on the inside of the buckle, but in tests it is found to have little or no adverse effect, especially with tool-assisted locking. The outside of the lock head can then be fully coated; the coated tie with its integrated coating is highly acceptable to users while also being easy to make in relatively few steps. Previous coated and partially coated ties have involved the assembly of the buckle onto the strap material after the latter has been separately coated.

A third aspect of our proposals relates to a modification of the lock head in a tie of the kind described. As mentioned the lock head defines a strap channel, with the locking element adjacent the channel. The internal head surface opposite i.e. facing the locking element can be called the floor of the head. In typical constructions this floor surface is that of a portion of the first, fixed end of the strap lying in a channel formed by the discrete head or buckle component. It is common for this first end of the strap to be bent around, or formed with one or more cuts or tabs, to hold the head in position longitudinally on the strap end after it has been slid onto the strap. Our proposal is that a longitudinally local recess should be provided in this floor of the head, at a position opposing the position of the locking element in its locked position, to enhance (or permit) bodily deformation of the part of the inserted free end of the strap on which the locking element acts down into that recess, thereby creating a degree of mechanical interlock between strap and buckle to complement the frictional engagement between the locking element and the upper surface of the strap. This recess may be constituted by a hole in the floor at the mentioned location. Where the floor surface is a region of the first end of the strap, a hole may be provided there through the strap, of suitable dimensions relative to the strap material and the dimensions of the locking element to facilitate deformation as described.

Preferably the hole/recess is shaped in relation to the locking element to discourage the latter from sitting down too far into the recess before the buckle operates: this might obstruct initial insertion of the strap's free end. So, the hole may be formed as a longitudinally elongate slot in the floor component. Such a slot may be laterally wider at the end nearer the exit opening, for the same reason.

A further option which also helps prevent premature settling of the locking element into the recess is to pre-cut the floor, e.g. with a U- or C-shaped cut or punch, thereby providing a bendable tab therein which may lie initially substantially in-plane but which under pressure from the locking element opposite (during locking) can bend down below the surrounding material to provide a recess. It may in this case be necessary to provide a corresponding recess, clearance or flexibility in an underlying floor structure e.g. in an underlying outer part of the discrete buckle component, to accommodate the bending tab.

This aspect is not confined to coated ties but may enhance the loop tensile strength in partially or entirely uncoated ties. With reference to the previous proposals, it also enables higher loop tensile strength and reliability in coated e.g. fully-coated ties even when these are coated with conventional coatings, such as nylon 11 or polyester. The mechanical partial interlock with the straps reduces the strength and adhesion requirements on the polymer coat so that better performance can be obtained.

Embodiments of our proposals are now described by way of example with reference to the accompanying drawings, in which
Fig. 1 is a top view of a finished cable tie;
Fig. 2 is a perspective view of the tie buckle in the locked condition;
Fig. 3 is a top view of the buckle end of the tie;
Fig. 4 is a bottom view of the buckle end of the tie;
Fig. 5 is side view of the buckle end of the tie:
Fig. 6 is a longitudinal cross-section at the buckle end of the tie before locking;
Fig. 7 is a corresponding section in the locked condition;
Fig. 8 is a schematic diagram of a method of preparing coated ties;
Fig. 9 is a longitudinal cross-section view at the buckle showing a modified construction;
Figs. 10(a), (b), (c), (d) are top views of respective recess formations which can be used in the variant of Fig. 9;
Figs. 11(a) and (b) are fragmentary perspective views of different kinds of hanger for powder coating;
Fig. 12 shows effects of the Fig. 11 hangers in use;
Fig. 13 and Fig. 14 illustrate optional variations to a head housing shape.

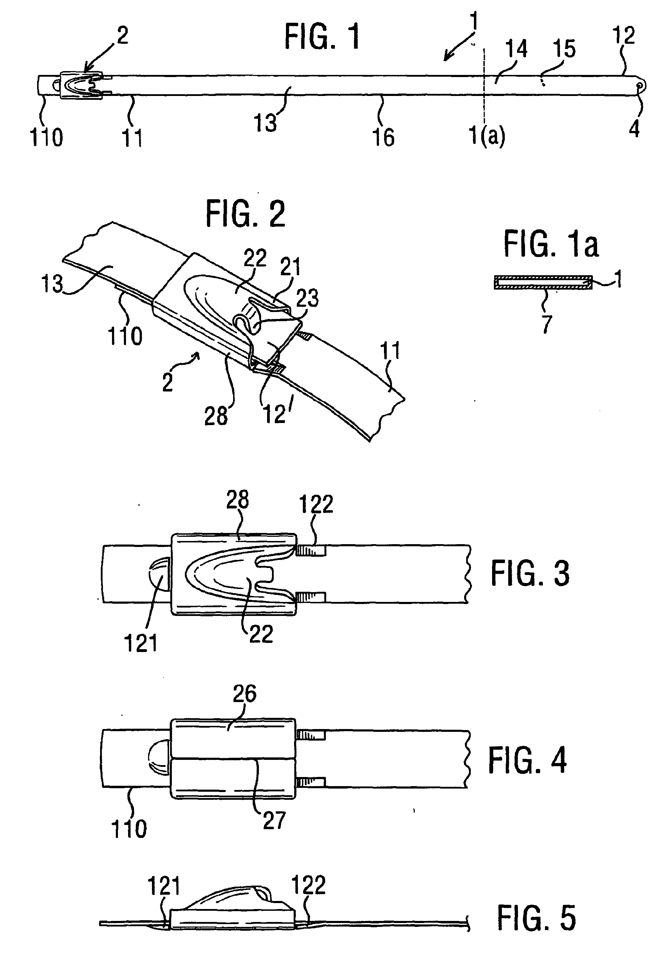

Fig. 1 shows the layout of a cable tie. The elongate metal strap 1 is of stainless steel, typically SUS 316 or 304. There are standard widths, presently 4.6 and 7.9mm, but these are not critical. The parts of the strap 1 are denoted as follows: an outer main surface 14 which faces outwardly when the tie is wrapped around a bundle, an inner main surface 15, lateral edges 16, a standing end 11, a main run 13 and a free end 12. A buckle 2 is secured at the standing end 11 with a short terminal part 110 of the standing end protruding. An optional hole 4 near the free end 12 can be used for suspending the strap when coating the strap (discussed later) and is not relevant to the locking and bundling functions.

The buckle 2 is a ball-locking buckle shown in more detail in Figs. 3-7. A casing 21 of the buckle is provided by a generally rectangular piece of steel which is cut, press-formed and has its edges 26 wrapped around a floor portion 111 of the strap's standing end 11, the wrapped ends 26 meeting along a centre junction 27 (see Fig. 4). The strap standing end 11 has pre-cut tangs 121,122 bent to project out-of-plane at either end of the buckle 2, preventing sliding to hold it in place longitudinally.

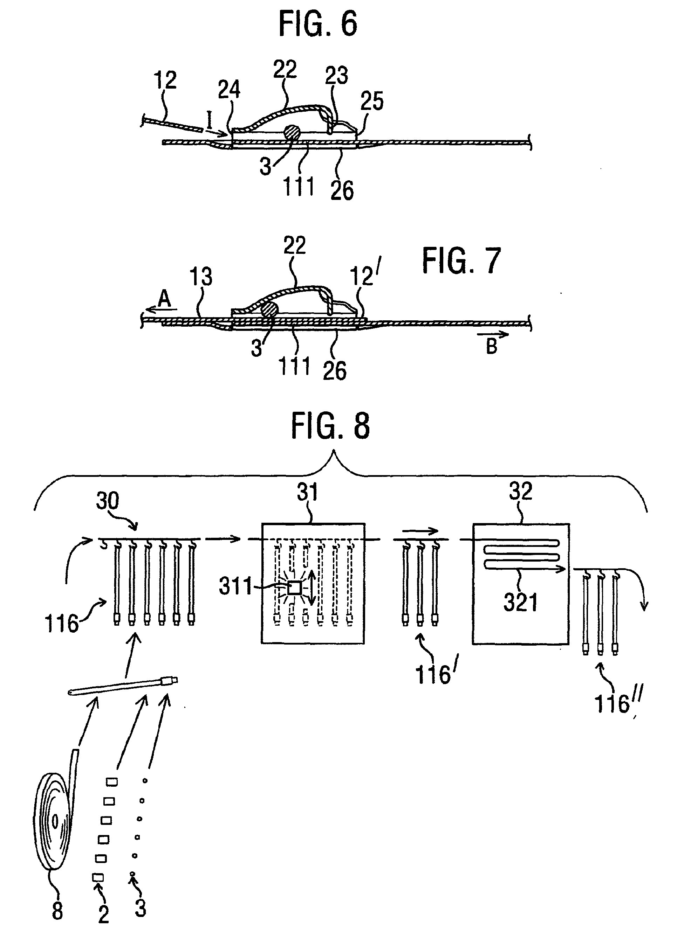

As seen in Figs. 2, 6 and 7 the upper (outer) part of the buckle 2 extends with clearance across the outer surface of the floor segment 111 of the strap to define a strap path or channel 102 above it. The top of the buckle includes a central bulge 22 tapering down in the direction towards the terminal 110 of the strap, and housing a locking ball 3. A retaining lug 23 at the end of the bulge formation 22 can be bent down after insertion of the ball 3 to hold it in place. In use, the free end 1 2 of the strap is pushed through the insertion opening 24 at one end of the buckle 2 (arrow I in Fig. 6) and out through the opposite exit opening 25. According to the size of the object(s) being tied (e.g. a cable bundle) the end 12 normally projects substantially beyond the exit opening 25. The strap 1 may be tightened by hand or by a special locking device which both tensions the straps and cuts off its free end, leaving a short cut end 12' (see Fig . 2) just inside the front "arms" 28 of the buckle case. The ball 3 naturally moves to the right in Fig. 6 upon insertion of the strap end, but when the strap is tensioned (arrows A, B in Fig. 7) the ball 3 is pulled to the low end of the housing bulge 22 and wedges firmly in place, locking the inserted strap down against the underlying fixed strap portion 111 and buckle floor 26. This locking action is well known.

A novel feature of this tie is that it is coated all over with a coating layer 7 of epoxy resin, covering the major surfaces 14,15 and also the lateral edges 16 of the metal strap 1: see Fig. 1(a). In particular the epoxy resin coating, which is typically between 3 and 5 thousandths of an inch thick, extends all over the plain smooth outer surface 14 of the strap which engages the ball 3 in the locked condition. The epoxy resin coat is applied by powder coating; specifically by electrostatic spray processing which is a preferred method for cable tie straps. Application methods are discussed further below. Thinner coatings - between 1½ and 3 thousands of an inch - give good locking performance but are more difficult to manufacture reliably.

The present examples used a bisphenol epoxy based powder coating formulation (available from Becker as EX200120SG) satisfying the following generalised composition:

| Component | % by weight |
|---|---|
| Flow modified epoxy resin | 40 - 60 |
| Pyromellitic acid diphenyl imidazoline salt | 0.5 - 3 |
| Carbon black | 0.5 - 2 |
| Substituted dicyandiamide | 0.5 - 1 |
| Barium sulphate | 40 - 50 |

These formulations are adapted for electrostatic spray application and flow out and cure under moderate conditions : recommended 10 minutes at 180°C for EX200120SG. The skilled person will appreciate that there is a variety of epoxy coating compositions suitable for coating onto metal, especially by electrostatic powder coating, and others may be used.

We have found in tests that an epoxy resin coat adheres excellently to the underlying steel without surface pre-treatment, giving excellent loop tensile strength and loop tensile locking reliability i.e. the locking ball 3 wedges reliably into a fixed engagement when the strap is tensioned. This has not been predicted and is quite contrary to results with nylon 11 coatings, which slip badly if used with ball locks, and with polyester coatings which we are aware of and which, while they can often achieve a lock, nevertheless have low reliability.

Given below in Table 1 are the tensile loop strength readings in a conventional "split mandrel" test for 25 sample ties as described, on 7.9mm 316 stainless steel. Almost all the readings are well over 1000N : these are unprecedented results for a fully-coated tie.

**Table 1**

| **lbs** | **Newtons** | **lbs** | **Newtons** |
|---|---|---|---|
| 249 | 1108 | 449 | 1997 |
| 315 | 1401 | 244 | 1085 |
| 475 | 2113 | 352 | 1566 |
| 379 | 1686 | 319 | 1418 |
| 382 | 1699 | 265 | 1179 |
| 352 | 1566 | 429 | 1908 |
| 262 | 1165 | 354 | 1574 |
| 426 | 1899 | 486 | 2161 |
| 400 | 1779 | 372 | 1654 |
| 413 | 1837 | 406 | 1806 |
| 388 | 1726 | | |
| 438 | 1948 | | |
| 397 | 1766 | | |
| 265 | 1179 | | |
| 177 | 787 | | |

The fully-coated strap gives comprehensive protection for the above-mentioned purposes of handling, and prevention of undesired galvanic actions with adjacent components. Relative to 'selectively coated' ties having a bare strip down the middle of the outer surface, a fully-coated tie is easier to make (because the step of removing a strip of coating from the strap is eliminated) and the buckle action is if anything more positive and reliable. Without being bound by theory, we think that the buckle action may be improved because, with a selectively coated strap, the strap is thicker at the coated sides than along the uncoated middle. So, when the fixed and free ends of a selectively-coated strap are superimposed in the buckle for locking, there is a small clearance between their middles which must first be taken up by the locking action, against the resilience of the strap material, before any lock is formed.

A further feature of the illustrated tie is that the buckle 2 is coated as well as the strap, and this may be done (and was done, for the above tests) by a distinctive method as illustrated in Fig. 8. Working from supplies of plain uncoated metal strip 8, pre-formed buckles 2 and balls 3, cable ties corresponding to Fig. 1 but entirely uncoated are fully made up. Suitable assembly processes for doing this arc established, and any skilled person can implement this stage. The ties are formed with punched end holes 4. Then, the fully made-up but uncoated ties are suspended on a travelling rack 30 of a loop production line, and passed into a powder coating spray booth 31 where, in a manner well-known as such, they are coated all over with the polymer powder coating preparation (epoxy, in the embodiment). Typically an electrostatic spray gun 311 at each side of the booth 31 is moved up and down to provide a substantially uniform coating all over the ties. This coating also goes onto the buckles, and to some extent penetrates to the interior of the buckles. The powder-coated ties 116' pass along the line to a curing oven 32 where they are subjected to an appropriate temperature for an appropriate time to effect flow-out and curing of the polymer. 321 indicates schematically a circuitous path in the oven 32, giving an appropriate residence time without interrupting the process. Emerging from the oven 32 the ties 116' are properly coated and ready for use.

It will be appreciated that the mode of hanging of the ties 116 and the heating arrangement may vary according to the nature of the powder coating used, in line with conventional skill. A significant finding is that when using this method, in which (conveniently) there is no mechanical assembly to be done after the coating procedure, perfectly good end insertion and tensile tie performance are achieved despite the buckle and also its locking ball being in place at the time of coating.

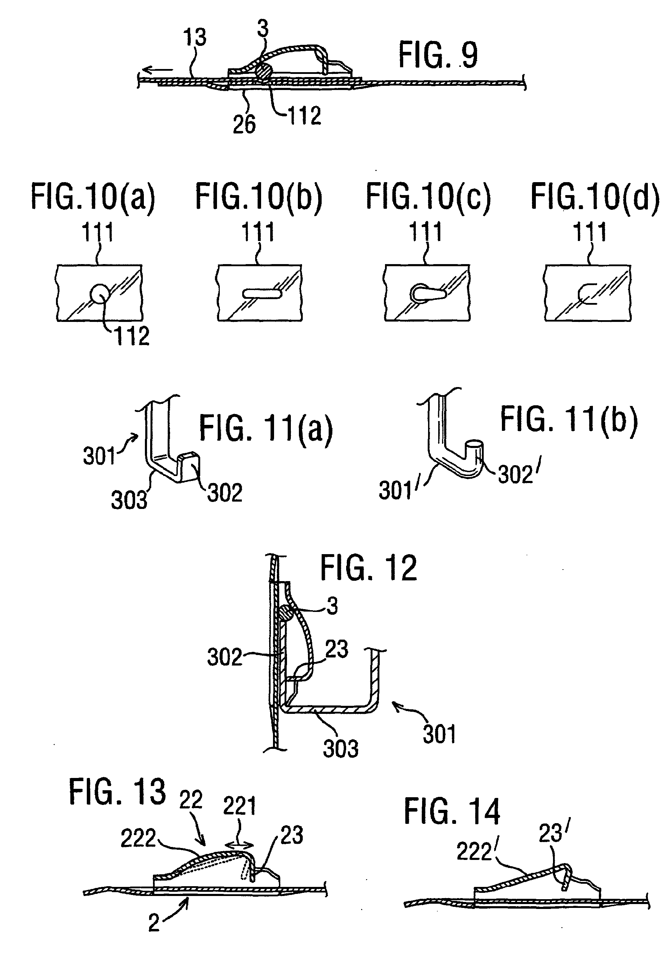

Figs. 9 and 10 illustrate a further variant, being a preferred feature for the present polymer coatings which already give good tensile locking, but also enabling the use of polymer coatings which do not in themselves give satisfactory locking, and being independently useful even on uncoated or selectively-coated ties. Specifically, the floor portion 111 of strap underlying the locking ball 3 is pre-formed with a central hole 112, registering longitudinally with the longitudinal position of the ball in the locked position. Because of this hole 112, the action of the ball 3 is able to bend the material of the inserted strap end locally down into the clearance provided by the hole 112, giving rise to a mechanical interlock in the tension direction and thereby increasing the tensile loop strength, so that even straps coated with slippery polymers such as nylon 11 may be effectively and reliably locked.

Fig. 10 shows various forms for the hole 112 in the fixed portion 111. A simple circular hole as in Fig. 10(a) is effective for locking. Depending on the relative dimensions of hole and ball, which in turn may depend on the dimensions of the strap, there may be a tendency for the ball 3 to lie in the hole 112 and obstruct insertion of the free strap end 12. This can be countered as in Fig. 10(b) by forming the hole 112 as a narrower elongate slot in which the ball will not sit until forced down, as in Fig. 10(c) by providing the hole at its 'downstream' side with a tapered incline, so that the ball 3 can easily ride up out of the hole when the strap end 12 is inserted, or as in Fig. 10(d) by part-forming the hole using a C-shaped cut leaving a flexible tab in situ and in plane. This tab easily supports the free ball, but under locking forces will deflect downwardly - if necessary, some clearance or corresponding hole may be provided in the buckle floor 26 beneath but this is not found always to be necessary - to give the desired mechanical interlock as before.

Figs. 11 and 12 illustrate an important alternative coating mode. Fig. 11 shows modified forms of hanging hook for the coating jig 30 (see Fig. 8). In the process described previously, the straps were hung up using the holes 4 in their free ends 12, on thin round wire hooks.

In this alternative mode, the straps are hung buckle-uppermost for spraying, using a hook 301 or 301' in the form of an L with an upturned end 302. The hook 301 (Fig. 11(a)) is formed from flat strip rather than round wire, so that its upturned end 302 is a close fit up through the buckle's exit opening 25 (beneath the retaining lug 23) as seen in Fig. 12. In this position, because of the width and thickness of the hook, its tip necessarily catches the ball 3 on insertion and holds it up at the narrow end of the buckle's interior cavity. At the same time the wide crosspiece 303 of the L partially blocks the opening.

However the flat hooks 301 may be difficult to make in robust form. Fig. 11(b) shows that a round wire hook 301' can take a similar form. Its upturned end 302' is also found able to catch the ball 3 and trap it up towards the narrow end of the head.

These arrangements incorporate a number of ideas useful for reducing the amount of powder coating which can enter the buckle. This can help to achieve higher levels of reliability, especially in smaller ties where even a small amount of errant coating material might make a significant difference. A first feature is that by hanging the tie with the wider exit opening 25 of the buckle downwards, gravity tends to stop powder material from getting into the buckle. The second idea is that by having a hook in it, this exit opening 25 can in any case be substantially blocked against powder entry. A third feature is that by dimensioning the hook tip 302,302' so that it carries the ball 3 with it, even in the remote chance that coating material sticks the ball inside the buckle, it will do so in a position where it will be pushed free by insertion of the strap end in use.

To test this method we carried out a further series of tests, this time on 4.6 mm width ties, for which the rated tensile loop strengths are normally substantially lower than for 7.9 mm ties. Materials and methods were otherwise the same as for the Table 1 data, except that hanger hooks of the Fig. 11 form were used to hang the straps buckle-uppermost as in Fig. 12. The results are given below in Table 2. Note: the thicknesses are in thousandths of an inch and are the entire strap thickness i.e. two coatings plus the thickness of the steel (11.75 thou). TOP is the buckle end, BOTTOM the free end.

| 4.6 Coated Ball-Lok Ties | | |
|---|---|---|
| THICKNESS TOP | THICKNESS BOTTOM | TENSILE LOOP STRENGTH |
| 13 | 15 | 365 |
| 16 | 15 | 347 |
| 14 | 15 | 348 |
| 14 | 14 | 329 |
| 15 | 15 | 358 |
| 16 | 16 | 369 |
| 14 | 15 | 373 |
| 16 | 16 | 386 |
| 16 | 16 | 365 |
| 16 | 15 | 333 |
| 15 | 16 | 363 |
| 15 | 16 | 356 |
| 14 | 15 | 393 |
| 14 | 15 | 340 |
| 14 | 15 | 364 |
| 15 | 15 | 363 |
| 13 | 14 | 348 |
| 15 | 15 | 303 |
| 15 | 16 | 419 |
| 14 | 15 | 372 |
| 14 | 16 | 425 |
| 15 | 15 | 372 |
| 15 | 15 | 334 |
| 13 | 15 | 441 |
| 15 | 16 | 436 |
| 14 | 14 | 420 |
| 15 | 16 | 454 |
| 16 | 15 | 376 |
| 15 | 15 | 372 |
| 15 | 15 | 462 |
| 15 | 15 | 358 |
| 13 | 15 | 429 |
| 16 | 16 | 319 |
| 16 | 17 | 325 |
| 13 | 14 | 316 |
| 16 | 16 | 351 |
| 15 | 16 | 434 |
| 14 | 14 | 420 |
| 13 | 15 | 441 |
| 14 | 15 | 424 |
| 13 | 14 | 427 |
| 16 | 15 | 400 |
| 16 | 15 | 429 |
| 14 | 15 | 417 |
| 13 | 14 | 372 |
| 15 | 15 | 442 |
| 13 | 15 | 475 |
| 13 | 15 | 422 |
| 14 | 14 | 404 |
| 16 | 16 | 354 |
| 75 | 15 | 421 |
| 13 | 14 | 345 |
| 13 | 15 | 392 |
| 15 | 15 | 392 |
| 13 | 14 | 393 |
| 15 | 15 | 354 |
| 15 | 16 | 429 |
| 15 | 15 | 411 |
| 13 | 14 | 369 |
| 16 | 15 | 406 |
| 16 | 16 | 380 |
| 14 | 15 | 438 |
| 14 | 15 | 423 |
| 15 | 15 | 425 |
| 13 | 15 | 341 |
| 15 | 16 | 445 |
| 15 | 16 | 348 |
| 16 | 15 | 308 |
| 14 | 15 | 449 |
| 15 | 16 | 468 |
| 14 | 14 | 405 |
| 13 | 14 | 381 |
| 14 | 14 | 444 |
| 13 | 15 | 437 |
| 16 | 15 | 409 |
| 14 | 14 | 456 |
| 15 | 15 | 366 |
| 13 | 14 | 415 |
| 15 | 15 | 408 |
| 15 | 16 | 464 |
| 14 | 15 | 456 |
| 13 | 15 | 465 |
| 14 | 14 | 343 |
| 13 | 14 | 407 |
| 13 | 15 | 427 |
| 13 | 15 | 427 |
| 16 | 16 | 446 |
| | | 34338 |
| | Average in lbs | 400 |

The average loop tensile of 400 lbs, with none of the many samples below 300 lbs, is a remarkable result. There are improvements in the wider ties too with these optimizations of the coating technique.

Fig. 13 shows the conventional shaping of a buckle 2, with some indication to the skilled reader as to where modifications can usefully be contemplated when tuning the operation of a given choice of coating, ball and strap. The conventional buckle top has a radiused bulge 22 (Fig. 13), with a near-parallel section 221 at its wider end. Fig. 14 shows possible modifications that may be made to promote locking of the ball onto a coated strap surface. The parallel section 221 may be reduced or eliminated, so that the housing top converges immediately back from its highest point. The radius of the bulge 22 may be increased, or indeed the tapering profile made effectively straight as shown at 222' in Fig. 14. A further possible modification for reducing the non-locking space for the ball is to angle the retaining lug 23 more steeply back into the ball space, as shown at 23' in Fig. 14.

## Claims

1. A cable tie comprising a coated metal strap and a locking head attached at or adjacent a first end of the strap, the locking head defining a strap channel with an insertion opening and an exit opening, through which the second end of the strap can be slid to form a loop, the locking head also housing a locking element which is movable in the locking head between an unlocked position, allowing insertion of the strap second end along the strap channel and a locked position, closer to the insertion opening than the unlocked position, in which its engagement with the surrounding structure of the locking head combined with tension in the strap acting towards the insertion opening forces it into locking engagement against a locking region of the strap to prevent withdrawal of the strap from the strap channel, **characterised in that**
the metal strap has an adherent coating of epoxy resin which is present along the locking region of the strap engaged by the locking element.

2. A cable tie according to claim 1 in which the epoxy resin coating covers both major surfaces of the metal strap, optionally also the side edges, optionally also the end edges.

3. A cable tie according to claim 1 or 2 in which the locking element is a ball.

4. A cable tie according to any one of the preceding claims in which the epoxy coating covers additionally the outside of the locking head.

5. A cable tie according to claim 4 in which the coating on the locking head is integral with the coating on the strap as a result of having been applied with the locking head assembled on the strap.

6. A cable tie according to any one of the preceding claims in which the epoxy coating is a powder coating.

7. A cable tie according to any one of the preceding claims having a local recess in the floor of the strap channel opposite the locked position of the locking element, to promote local deformation of the portion of the strap engaged by the locking element.

8. A method of making a cable tie according to any one of claims 1 to 8 comprising subjecting the metal strap with the locking head assembled onto it to powder coating, to coat the outsides of both strap and head simultaneously with epoxy resin.

9. A method according to claim 8 in which the locking element is present in the locking head during the coating.

10. A method according to claim 8 or 9 in which the strap with the locking head assembled is suspended with its first end, having the locking head, uppermost for the powder coating.

11. A method according to claim 10 in which the assembled strap and head are suspended from a hanger element that engages in the exit opening of the locking head.

12. A method according to claim 9 and 11 in which the hanger element engages the locking element which is thereby held away from the exit opening of the locking head.
